# EUROPÄISCHE PATENTSCHRIFT

(11) **EP 2 681 017 B1**
(45) Veröffentlichungstag und Bekanntmachung des Hinweises auf die Patenterteilung: **03.07.2019**
(21) Anmeldenummer: 12717039.7
(22) Anmeldetag: 02.03.2012
(51) Int. Cl.: B27B 17/00, B25H 1/00

(54) **WERKZEUGMASCHINENSYSTEM**
MACHINE TOOL SYSTEM
SYSTÈME DE MACHINE-OUTIL

(30) Priorität: 03.03.2011 DE 102011005018
(43) Veröffentlichungstag der Anmeldung: 08.01.2014
(73) Patentinhaber: Robert Bosch GmbH, 70469 Stuttgart (DE)
(72) Erfinder: FUCHS, Rudolf, 73765 Neuhausen (DE)
(86) Internationale Anmeldenummer: PCT/EP2012/000915
(87) Internationale Veröffentlichungsnummer: WO 2012/116826

(56) Entgegenhaltungen:
- EP-A2- 0 062 188
- WO-A2-98/52728
- DE-A1-102006 062 001
- DE-U1- 20 120 984
- FR-A1- 2 597 024
- US-A- 4 146 962
- US-A- 4 382 334
- US-A- 4 821 415

## Beschreibung

### Stand der Technik

Es sind bereits Werkzeugmaschinensysteme bekannt, die eine tragbare Werkzeugmaschine und eine Werkzeugmaschinentrennvorrichtung umfassen. Hierbei weist die Werkzeugmaschinentrennvorrichtung einen Schneidstrang und eine Führungseinheit zur Führung des Schneidstrangs auf, die zusammen ein geschlossenes System bilden. Ein Werkzeugmaschinensystem gemäß dem Oberbergriff des Anspruchs 1 ist offenbart in US4821415.

### Offenbarung der Erfindung

Die Erfindung geht aus von einem Werkzeugmaschinensystem mit zumindest einer tragbaren Werkzeugmaschine und mit zumindest einer Werkzeugmaschinentrennvorrichtung, die zumindest einen Schneidstrang und zumindest eine Führungseinheit zur Führung des Schneidstrangs umfasst, die zumindest zusammen mit dem Schneidstrang ein geschlossenes System bildet.

Es wird vorgeschlagen, dass das Werkzeugmaschinensystem zumindest eine Schnittkantenführungseinheit umfasst. Besonders bevorzugt ist die Schnittkantenführungseinheit dazu vorgesehen, die Werkzeugmaschinentrennvorrichtung und/oder die tragbare Werkzeugmaschine entlang einer Schnittkante zu führen. Unter einer "tragbaren Werkzeugmaschine" soll hier insbesondere eine Werkzeugmaschine, insbesondere eine Handwerkzeugmaschine, verstanden werden, die von einem Bediener transportmaschinenlos transportiert werden kann. Die tragbare Werkzeugmaschine weist insbesondere eine Masse auf, die kleiner ist als 40 kg, bevorzugt kleiner als 10 kg und besonders bevorzugt kleiner als 5 kg.

Unter einem "Schneidstrang" soll hier insbesondere eine Einheit verstanden werden, die dazu vorgesehen ist, einen atomaren Zusammenhalt eines zu bearbeitenden Werkstücks örtlich aufzuheben, insbesondere mittels eines mechanischen Abtrennens und/oder mittels eines mechanischen Abtragens von Werkstoffteilchen des Werkstücks. Unter "vorgesehen" soll hier insbesondere speziell ausgelegt und/oder speziell ausgestattet verstanden werden. Bevorzugt ist der Schneidstrang dazu vorgesehen, das Werkstück in zumindest zwei physikalisch voneinander getrennte Teile zu separieren und/oder zumindest teilweise Werkstoffteilchen des Werkstücks ausgehend von einer Oberfläche des Werkstücks abzutrennen und/oder abzutragen. Besonders bevorzugt wird der Schneidstrang in zumindest einem Betriebszustand umlaufend bewegt, insbesondere entlang eines Umfangs der Führungseinheit.

Unter einer "Führungseinheit" soll hier insbesondere eine Einheit verstanden werden, die dazu vorgesehen ist, eine Zwangskraft zumindest entlang einer Richtung senkrecht zu einer Schneidrichtung des Schneidstrangs auf den Schneidstrang auszuüben, um eine Bewegungsmöglichkeit des Schneidstrangs entlang der Schneidrichtung vorzugeben. Bevorzugt weist die Führungseinheit zumindest ein Führungselement auf, insbesondere eine Führungsnut, durch das der Schneidstrang geführt wird. Bevorzugt ist der Schneidstrang, in einer Schneidebene betrachtet, entlang eines gesamten Umfangs der Führungseinheit durch die Führungseinheit mittels des Führungselements, insbesondere der Führungsnut, geführt. Vorzugsweise ist die Führungseinheit als Schwert ausgebildet. Der Begriff "Schwert" soll hier insbesondere eine geometrische Form definieren, die, in der Schneidebene betrachtet, eine in sich geschlossene Außenkontur aufweist, die zumindest zwei zueinander parallel verlaufende Geraden und zumindest zwei jeweils sich zugewandte Enden der Geraden miteinander verbindende Verbindungsabschnitte, insbesondere Kreisbögen, umfasst. Somit weist die Führungseinheit eine geometrische Form auf, die sich, in der Schneidebene betrachtet, aus einem Rechteck und zumindest zwei an sich gegenüberliegenden Seiten des Rechtecks angeordneten Kreissektoren zusammensetzt. Der Begriff "Schneidebene" soll hier insbesondere eine Ebene definieren, in der der Schneidstrang in zumindest einem Betriebszustand entlang eines Umfangs der Führungseinheit in zumindest zwei zueinander entgegengesetzt gerichtete Schneidrichtungen relativ zur Führungseinheit bewegt wird. Bevorzugt ist die Schneidebene bei einer Bearbeitung eines Werkstücks zumindest im Wesentlichen quer zu einer bearbeitenden Werkstückoberfläche ausgerichtet. Unter "zumindest im Wesentlichen quer" soll hier insbesondere eine Ausrichtung einer Ebene und/oder einer Richtung relativ zu einer weiteren Ebene und/oder einer weiteren Richtung verstanden werden, die bevorzugt von einer parallelen Ausrichtung der Ebene und/oder der Richtung relativ zu der weiteren Ebene und/oder der weiteren Richtung abweicht. Es ist jedoch auch denkbar, dass die Schneidebene bei einer Bearbeitung eines Werkstücks zumindest im Wesentlichen parallel zu einer bearbeitenden Werkstückoberfläche ausgerichtet ist, insbesondere bei einer Ausbildung des Schneidstrangs als Schleifmittel usw. Unter "zumindest im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist.

Unter einer "Schneidrichtung" soll hier insbesondere eine Richtung verstanden werden, entlang der der Schneidstrang zur Erzeugung eines Schneidspalts und/oder zur Abtrennung und/oder zur Abtragung von Werkstoffteilchen eines zu bearbeitenden Werkstücks in zumindest einem Betriebszustand infolge einer Antriebskraft und/oder eines Antriebsmoments, insbesondere in der Führungseinheit, bewegt wird. Bevorzugt wird der Schneidstrang in einem Betriebszustand entlang der Schneidrichtung relativ zur Führungseinheit bewegt. Der Begriff "geschlossenes System" soll hier insbesondere ein System definieren, das zumindest zwei Komponenten umfasst, die mittels eines Zusammenwirkens in einem demontierten Zustand des Systems von einem dem System übergeordneten System, wie beispielsweise einer tragbaren Werkzeugmaschine, eine Funktionalität beibehalten und/oder die im demontierten Zustand unverlierbar miteinander verbunden sind. Bevorzugt sind die zumindest zwei Komponenten des geschlossenen Systems für einen Bediener zumindest im Wesentlichen unlösbar miteinander verbunden. Unter "zumindest im Wesentlichen unlösbar" soll hier insbesondere eine Verbindung von zumindest zwei Bauteilen verstanden werden, die lediglich unter der Zuhilfenahme von Trennwerkzeugen, wie beispielsweise einer Säge, insbesondere einer mechanischen Säge usw., und/oder chemischen Trennmitteln, wie beispielsweise Lösungsmittel usw., voneinander trennbar sind. Unter einer "Schnittkantenführungseinheit" soll hier insbesondere eine Einheit verstanden werden, die dazu vorgesehen ist, die Werkzeugmaschinentrennvorrichtung und/oder die tragbare Werkzeugmaschine entlang einer Schnittkante eines mittels des Schneidstrangs in ein zu bearbeitendes Werkstück einbringbaren Schnitts zu führen und ein Verlaufen der Werkzeugmaschinentrennvorrichtung, und/oder ein Abweichen der Werkzeugmaschinentrennvorrichtung von einer gewollten Schnittlinie weitgehend zu verhindern. Mittels der erfindungsgemäßen Ausgestaltung kann vorteilhaft ein exakter Schnitt durch eine Einhaltung der gewollten Schnittlinie erreicht werden. Somit kann vorteilhaft eine präzise Bearbeitung eines Werkstücks erreicht werden.

Des Weiteren wird vorgeschlagen, dass die Schnittkantenführungseinheit zumindest ein Schnittkantenführungselement umfasst, das dazu vorgesehen ist, bei einer Bewegung der Werkzeugmaschinentrennvorrichtung und/oder der tragbaren Werkzeugmaschine relativ zum Schnittkantenführungselement zumindest in einem mit dem Schnittkantenführungselement gekoppelten Zustand der Werkzeugmaschinentrennvorrichtung und/oder der tragbaren Werkzeugmaschine zumindest in zwei zueinander entgegengesetzt gerichtete Richtungen wirkende Zwangskräfte auf die Werkzeugmaschinentrennvorrichtung und/oder auf die tragbare Werkzeugmaschine auszuüben. Unter einer "Zwangskraft" soll hier insbesondere eine Kraft verstanden werden, die dazu vorgesehen ist, einen Körper an einer Bewegung in zumindest eine Richtung zu hindern und/oder den Körper bei einer Bewegung auf einer mittels einer Einwirkung der Kraft auf den Körper vorgegebenen Bahn zu halten. Besonders bevorzugt wirkt die Zwangskraft zumindest im Wesentlichen senkrecht zu einer Fläche, auf und/oder entlang der sich ein Körper bewegen kann. Somit wirken die Zwangskräfte vorteilhafterweise zumindest im Wesentlichen senkrecht zu einer Längsachse des Schnittkantenführungselements auf die Werkzeugmaschinentrennvorrichtung und/oder die tragbare Werkzeugmaschine. Die Schnittkantenführungseinheit ist als Linearführungseinheit ausgebildet. Unter einer "Linearführungseinheit" soll hier insbesondere eine Einheit verstanden werden, die eine Translation einer oder mehrerer beweglicher Bauteile ermöglicht und dabei gleichzeitig die Einhaltung der Bewegungsrichtung gewährleistet. Besonders bevorzugt ist das Schnittkantenführungselement als Führungsschiene ausgebildet. Vorzugsweise wird das Schnittkantenführungselement auf eine Oberfläche eines zu bearbeitenden Werkstücks aufgelegt. Bevorzugt weist das Schnittführungselement einen Anschlag und/oder eine Klemmvorrichtung auf, mittels dem und/oder der das Schnittkantenführungselement an einem zu bearbeitenden Werkstück entlang zumindest einer Richtung an einer Bewegung gehindert werden kann. Insbesondere kann das Schnittkantenführungselement mittels der Klemmvorrichtung auf einer Oberfläche eines zu bearbeitenden Werkstücks relativ zum Werkstück fixiert werden. Das Schnittkantenführungselement kann vorteilhaft mit einer Kante an eine Schnittkante eines mittels des Schneidstrangs in ein zu bearbeitendes Werkstück einbringbaren Schnitts und/oder an eine vorgezeichnete Schnittlinie zur Erreichung eines präzisen Schnitts angelegt werden. Es kann vorteilhaft eine präzise Führung der Werkzeugmaschinentrennvorrichtung entlang einer Schnittkante erreicht werden.

Vorzugsweise weist das Schnittkantenführungselement zumindest ein rippenförmiges Verbindungselement auf, das mit zumindest einem korrespondierenden Kopplungselement einer Schnittkantenführungskopplungseinheit der tragbaren Werkzeugmaschine formschlüssig verbindbar ist. Bevorzugt ist das Kopplungselement nutförmig ausgebildet. Das Verbindungselement und das Kopplungselement sind in einem miteinander verbundenen Zustand vorzugsweise dazu vorgesehen, eine Bewegung der Werkzeugmaschinentrennvorrichtung und/oder der tragbaren Werkzeugmaschine zumindest im Wesentlichen quer zu einer Längsachse des Schnittkantenführungselements weitestgehend zu verhindern. Es ist jedoch auch denkbar, dass das Kopplungselement und/oder das Verbindungselement eine andere, einem Fachmann als sinnvoll erscheinende miteinander korrespondierende Ausgestaltung aufweisen. In einem gekoppelten Zustand der Schnittkantenführungseinheit mit der Schnittkantenführungskopplungseinheit ist eine der Werkzeugmaschinentrennvorrichtung zugewandte Kante des Schnittkantenführungselements weitestgehend identisch mit einer Schneidkante des Schneidstrangs der Werkzeugmaschinentrennvorrichtung. Die Schnittkantenführungskopplungseinheit kann zumindest teilweise einstückig mit einer Kopplungsvorrichtung der tragbaren Werkzeugmaschine ausgebildet sein, die dazu vorgesehen ist, die Werkzeugmaschinentrennvorrichtung formschlüssig und/oder kraftschlüssig mit der tragbaren Werkzeugmaschine zu koppeln. Es ist jedoch auch denkbar, dass die Schnittkantenführungskopplungseinheit einstückig mit einem Werkzeugmaschinengehäuse oder einer Grundplatte o. dgl. der tragbaren Werkzeugmaschine ausgebildet ist. Unter "einstückig" soll hier insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Der Begriff "Kopplungsvorrichtung" soll hier insbesondere eine Vorrichtung definieren, die dazu vorgesehen ist, die Werkzeugmaschinentrennvorrichtung mittels einer formschlüssigen und/oder kraftschlüssigen Verbindung zur Bearbeitung eines Werkstücks mit der tragbaren Werkzeugmaschine wirkungsmäßig zu verbinden. Insbesondere können in einem mit der Werkzeugmaschinentrennvorrichtung gekoppelten Zustand der Kopplungsvorrichtung in einem Betriebszustand der tragbaren Werkzeugmaschine Kräfte und/oder Drehmomente von einer Antriebseinheit der tragbaren Werkzeugmaschine zum Antrieb des Schneidstrangs an die Werkzeugmaschinentrennvorrichtung übertragen werden. Somit ist die Kopplungsvorrichtung vorzugsweise als Werkzeugaufnahme ausgebildet. Ferner ist es jedoch auch denkbar, dass die Schnittkantenführungskopplungseinheit getrennt von der Kopplungsvorrichtung der tragbaren Werkzeugmaschine ausgebildet ist und beispielsweise mittels einer formschlüssigen und/oder einer kraftschlüssigen Verbindung mit einem Werkzeugmaschinengehäuse der tragbaren Werkzeugmaschine verbindbar ist. Mittels der erfindungsgemäßen Ausgestaltung kann vorteilhaft eine exakte Führung der Werkzeugmaschinentrennvorrichtung und/oder der tragbaren Werkzeugmaschine entlang einer Schnittkante erreicht werden. Es kann vorteilhaft eine hohe Flexibilität hinsichtlich eines Einsatzgebiets der tragbaren Werkzeugmaschine erreicht werden. Bei einem Bedarf einer Schnittkantenführung kann somit vorteilhaft eine formschlüssige Verbindung mit einem Schnittkantenführungselement realisiert werden.

Vorteilhafterweise ist die Werkzeugmaschinentrennvorrichtung in einem montierten Zustand, entlang einer zumindest im Wesentlichen senkrecht zu einer Schneidebene des Schneidstrangs verlaufenden Richtung, zwischen zumindest zwei Kopplungselementen der Schnittkantenführungskopplungseinheit angeordnet. Der Ausdruck "zwischen" soll hier insbesondere eine räumliche Anordnung eines Bauteils entlang zumindest einer Richtung zwischen zwei Teilbereichen eines weiteren Bauteils oder zwischen zwei weiteren Bauteilen definieren, wobei vorzugsweise zumindest eine Gerade entlang der Richtung existiert, die das Bauteil und die beiden Teilbereiche des weiteren Bauteils oder das Bauteil und die zwei weiteren Bauteile schneidet. Es kann vorteilhaft eine beidseitige Führung der Werkzeugmaschinentrennvorrichtung und/oder der tragbaren Werkzeugmaschine realisiert werden.

Ferner wird vorgeschlagen, dass zumindest die Führungseinheit an den zumindest zwei Kopplungselementen anliegt. Bevorzugt liegt jeweils eine von zwei Außenflächen der Führungseinheit in einem Teilbereich direkt an jeweils einer der Führungseinheit zugewandten Seitenwand eines der Kopplungselemente an. Vorzugsweise liegt jede Außenfläche jeweils mit mehr als 10 % eines gesamten Flächeninhalts der Außenfläche, bevorzugt mit mehr als 20 % und besonders bevorzugt mit mehr als 30 % an der der Führungseinheit zugewandten Seitenwand eines der Kopplungselemente an. Insbesondere liegen die Außenflächen in einem Teilbereich der Führungseinheit an den Kopplungselementen an, der zumindest mehr als 5 %, bevorzugt mehr als 10 % und besonders bevorzugt zumindest mehr als 15 % von einer Gesamtlänge der Führungseinheit beabstandet zu einem Drehmomenteinleitungspunkt zum Antrieb des Schneidstrangs angeordnet ist. Somit bilden die Kopplungselemente vorzugsweise eine Seitenabstützungseinheit, die dazu vorgesehen ist, die Werkzeugmaschinentrennvorrichtung, insbesondere die Führungseinheit, zumindest in zwei entgegengesetzt gerichtete Richtungen zu stützen. Es kann besonders vorteilhaft eine hohe Seitenstabilität der Führungseinheit bei einer Bearbeitung von Werkstücken erreicht werden.

Zudem wird vorgeschlagen, dass die Schnittkantenführungskopplungseinheit eine Längsachse aufweist, die zumindest in einem Betriebszustand zumindest im Wesentlichen senkrecht zu einer Antriebseinheitslängsachse einer Antriebseinheit der tragbaren Werkzeugmaschine angeordnet ist. Es ist jedoch auch denkbar, dass die Längsachse eine andere, einem Fachmann als sinnvoll erscheinende relative Ausrichtung zur Antriebseinheitslängsachse aufweist. Der Begriff "Antriebseinheit" soll hier insbesondere eine Einheit definieren, die dazu vorgesehen ist, Kräfte und/oder Drehmomente zu einem Antrieb des Schneidstrangs zu erzeugen. Bevorzugt wird zur Erzeugung von Kräften und/oder von Drehmomenten mittels der Antriebseinheit thermische Energie, chemische Energie und/oder elektrische Energie in Bewegungsenergie umgewandelt. Insbesondere ist die Antriebseinheit direkt und/oder indirekt mit dem Schneidstrang koppelbar ausgebildet. Besonders bevorzugt umfasst die Antriebseinheit zumindest einen Stator und zumindest einen Rotor, der zumindest eine Ankerwelle aufweist. Unter einer "Antriebseinheitslängsachse" soll hier insbesondere eine Achse der Antriebseinheit verstanden werden, die zumindest im Wesentlichen koaxial zu einer Rotationsachse einer Antriebswelle der Antriebseinheit, insbesondere einer Ankerwelle der Antriebseinheit, verläuft. Insbesondere weist die Antriebseinheit entlang der Antriebseinheitslängsachse eine maximale Abmessung auf. Der Begriff "Längsachse" soll hier insbesondere eine Achse definieren, entlang der ein Bauteil, insbesondere die Schnittkantenführungskopplungseinheit, eine maximale Abmessung aufweist. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Mittels der erfindungsgemäßen Ausgestaltung des Werkzeugmaschinensystems kann vorteilhaft eine kompakte Werkzeugmaschine erreicht werden. Ferner kann vorteilhaft ein hoher Bedienkomfort bei einer Bearbeitung eines Werkstücks für einen Bediener erreicht werden.

Ferner geht die Erfindung aus von einer Werkzeugmaschinentrennvorrichtung für ein erfindungsgemäßes Werkzeugmaschinensystem, mit zumindest einem Schneidstrang und mit zumindest einer Führungseinheit zur Führung des Schneidstrangs. Es wird vorgeschlagen, dass die Werkzeugmaschinentrennvorrichtung zumindest eine Schnittkantenführungskopplungseinheit umfasst, die mit zumindest einem Schnittkantenführungselement einer Schnittkantenführungseinheit koppelbar ist. Somit kann besonders vorteilhaft eine präzise Bearbeitung eines Werkstücks mittels der erfindungsgemäßen Werkzeugmaschinentrennvorrichtung erreicht werden.

Vorzugsweise ist die Schnittkantenführungskopplungseinheit zumindest teilweise einstückig mit der Führungseinheit ausgebildet. Es ist jedoch auch denkbar, dass die Schnittkantenführungskopplungseinheit mittels einer formschlüssigen und/oder kraftschlüssigen Verbindung lösbar mit der Führungseinheit verbunden ist. Es kann vorteilhaft eine kompakte Ausgestaltung der Schnittkantenführungskopplungseinheit erreicht werden.

Des Weiteren wird vorgeschlagen, dass die Schnittkantenführungskopplungseinheit zumindest ein Kopplungselement aufweist, das dazu vorgesehen ist, rippenförmige Verbindungselemente des Schnittkantenführungselements aufzunehmen. Besonders bevorzugt ist das Kopplungselement hierbei nutförmig ausgebildet. Es ist jedoch auch denkbar, dass das Kopplungselement und/oder das Verbindungselement eine andere einem Fachmann als sinnvoll erscheinende Ausgestaltung aufweisen. Es kann vorteilhaft eine exakte Führung der Werkzeugmaschinentrennvorrichtung entlang einer Schnittkante erreicht werden.

Des Weiteren geht die Erfindung aus von einer tragbaren Werkzeugmaschine für ein erfindungsgemäßes Werkzeugmaschinensystem, mit zumindest einer Kopplungsvorrichtung, die formschlüssig und/oder kraftschlüssig mit einer Werkzeugmaschinentrennvorrichtung koppelbar ist, und mit zumindest einer Schnittkantenführungskopplungseinheit, die mit zumindest einem Schnittkantenführungselement einer Schnittkantenführungseinheit koppelbar ist. Es kann vorteilhaft konstruktiv einfach eine Kopplung der Schnittkantenführungseinheit realisiert werden und zudem kann vorteilhaft ein präzises Arbeiten mit der tragbaren Werkzeugmaschine realisiert werden.

Die erfindungsgemäße Werkzeugmaschinentrennvorrichtung und/oder die erfindungsgemäße tragbare Werkzeugmaschine sollen hierbei nicht auf die oben beschriebene Anwendung und Ausführungsform beschränkt sein. Insbesondere kann die erfindungsgemäße Werkzeugmaschinentrennvorrichtung und/oder die erfindungsgemäße tragbare Werkzeugmaschine zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Werkzeugmaschinensystem mit einer erfindungsgemäßen Schnittkantenführungseinheit in einer schematischen Darstellung,
- Fig. 2: eine Detailansicht der Schnittkantenführungseinheit und einer Schnittkantenführungskopplungseinheit einer erfindungsgemäßen tragbaren Werkzeugmaschine in einer schematischen Darstellung,
- Fig. 3: eine Detailansicht einer erfindungsgemäßen Werkzeugmaschinentrennvorrichtung in einer schematischen Darstellung,
- Fig. 4: eine Schnittansicht entlang der Linie IV-IV aus Figur 3 der erfindungsgemäßen Werkzeugmaschinentrennvorrichtung in einer schematischen Darstellung,
- Fig. 5: eine Detailansicht von Schneidenträgerelementen eines Schneidstrangs der erfindungsgemäßen Werkzeugmaschinentrennvorrichtung in einer schematischen Darstellung,
- Fig. 6: eine weitere Detailansicht eines der Schneidenträgerelemente des Schneidstrangs der erfindungsgemäßen Werkzeugmaschinentrennvorrichtung in einer schematischen Darstellung,
- Fig. 7: eine Detailansicht einer Anordnung der Schneidenträgerelemente in einer Führungseinheit der erfindungsgemäßen Werkzeugmaschinentrennvorrichtung in einer schematischen Darstellung,
- Fig. 8: eine alternative erfindungsgemäße tragbare Werkzeugmaschine in einer schematischen Darstellung,
- Fig. 9: eine Detailansicht der alternativen erfindungsgemäßen tragbaren Werkzeugmaschine mit einer angelegten Schnittkantenführungseinheit in einer schematischen Darstellung,
- Fig. 10: eine alternative erfindungsgemäße Werkzeugmaschinentrennvorrichtung in einer schematischen Darstellung.

### Beschreibung der Ausführungsbeispiele

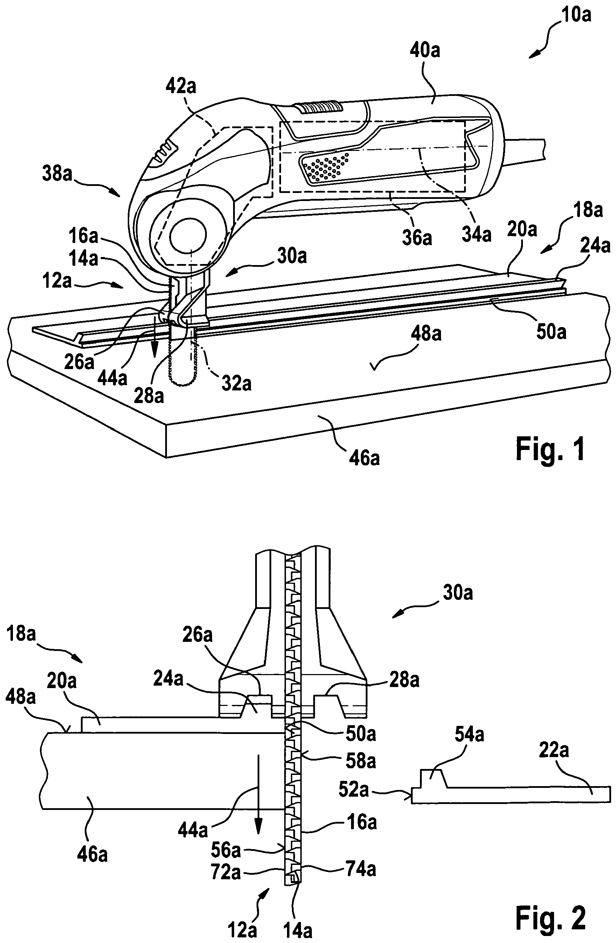

Figur 1 zeigt eine tragbare Werkzeugmaschine 10a mit einer Werkzeugmaschinentrennvorrichtung 12a, die zusammen ein Werkzeugmaschinensystem bilden. Die tragbare Werkzeugmaschine 10a weist eine Kopplungsvorrichtung 38a zur formschlüssigen und/oder kraftschlüssigen Kopplung mit der Werkzeugmaschinentrennvorrichtung 12a auf. Die Kopplungsvorrichtung 38a kann hierbei als Bajonettverschluss und/oder als eine andere, einem Fachmann als sinnvoll erscheinende Kopplungsvorrichtung ausgebildet sein. Ferner weist die tragbare Werkzeugmaschine 10a ein Werkzeugmaschinengehäuse 40a auf, das eine Antriebseinheit 36a und eine Getriebeeinheit 42a der tragbaren Werkzeugmaschine 10a umschließt. Die Antriebseinheit 36a und die Getriebeeinheit 42a sind zur Erzeugung eines auf die Werkzeugmaschinentrennvorrichtung 12a übertragbaren Antriebsmoments auf eine, einem Fachmann bereits bekannte Art und Weise wirkungsmäßig miteinander verbunden. Hierbei sind die Antriebseinheit 36a und/oder die Getriebeeinheit 42a dazu vorgesehen, in einem montierten Zustand mittels der Kopplungsvorrichtung 38a mit einem Schneidstrang 14a der Werkzeugmaschinentrennvorrichtung 12a gekoppelt zu werden. Die Getriebeeinheit 42a der tragbaren Werkzeugmaschine 10a ist als Winkelgetriebe ausgebildet. Die Antriebseinheit 36a ist als Elektromotoreinheit ausgebildet. Es ist jedoch auch denkbar, dass die Antriebseinheit 36a und/oder die Getriebeeinheit 42a eine andere, einem Fachmann als sinnvoll erscheinende Ausgestaltung aufweisen. Die Antriebseinheit 36a ist dazu vorgesehen, den Schneidstrang 14a der Werkzeugmaschinentrennvorrichtung 12a in zumindest einem Betriebszustand mit einer Schnittgeschwindigkeit kleiner als 6 m/s anzutreiben. Hierbei weist die tragbare Werkzeugmaschine 10a zumindest einen Betriebsmodus auf, in dem ein Antrieb des Schneidstrangs 14a in einer Führungseinheit 16a der Werkzeugmaschinentrennvorrichtung 12a entlang einer Schneidrichtung 44a des Schneidstrangs 14a mit einer Schnittgeschwindigkeit kleiner als 6 m/s ermöglicht wird.

Ferner umfasst das Werkzeugmaschinensystem eine Schnittkantenführungseinheit 18a, die dazu vorgesehen ist, die Werkzeugmaschinentrennvorrichtung 12a und/oder die tragbare Werkzeugmaschine 10a entlang einer gewollten Schnittkante zu führen. Die Schnittkantenführungseinheit 18a umfasst hierbei ein erstes Schnittkantenführungselemente 20a, das dazu vorgesehen ist, bei einer Bewegung der Werkzeugmaschinentrennvorrichtung 12a und/oder der tragbaren Werkzeugmaschine 10a relativ zum ersten Schnittkantenführungselement 20a zumindest in einem mit dem ersten Schnittkantenführungselement 20a gekoppelten Zustand der Werkzeugmaschinentrennvorrichtung 12a und/oder der tragbaren Werkzeugmaschine 10a zumindest in zwei zueinander entgegengesetzt gerichtete Richtungen wirkende Zwangskräfte auf die Werkzeugmaschinentrennvorrichtung 12a und/oder auf die tragbare Werkzeugmaschine 12a auszuüben. Ferner kann das erste Schnittkantenführungselement 20a zur Führung der Werkzeugmaschinentrennvorrichtung 12a und/oder der tragbaren Werkzeugmaschine 10a entlang einer Schnittkante bei einer Bearbeitung eines Werkstücks 46a auf eine Oberfläche 48a des Werkstücks 46a aufgelegt werden. Zur Einbringung eines Schnitts in das Werkstück 46a wird die tragbare Werkzeugmaschine 10a zusammen mit der in der Kopplungsvorrichtung 38a angeordneten Werkzeugmaschinentrennvorrichtung 12a von einem Bediener entlang einer Führungsfläche 50a des ersten Schnittkantenführungselements 20a und/oder einer Führungsfläche 52a des zweiten Schnittkantenführungselements 22a bewegt.

Das erste Schnittkantenführungselement 20a weist zu einer präzisen Führung der Werkzeugmaschinentrennvorrichtung 12a und/oder der tragbaren Werkzeugmaschine 10a ein rippenförmiges Verbindungselement 24a auf (Figur 2), das mit einem von zwei korrespondierenden Kopplungselementen 26a, 28a einer Schnittkantenführungskopplungseinheit 30a der tragbaren Werkzeugmaschine 10a formschlüssig verbindbar ist. Das rippenförmige Verbindungselement 24a erstreckt sich entlang einer Längsachse des ersten Schnittkantenführungselements 20a entlang einer gesamten Erstreckung des ersten Schnittkantenführungselements 20a. Die Schnittkantenführungseinheit 18a weist ferner ein zweites Schnittkantenführungselement 22a auf, das eine zum ersten Schnittkantenführungselement 20a analoge Ausgestaltung aufweist. Somit weist das zweite Schnittkantenführungselement 22a ebenfalls ein rippenartiges Verbindungselement 54a zur formschlüssigen Verbindung mit einem der Kopplungselemente 26a, 28a der Schnittkantenführungskopplungseinheit 30a auf. Das erste Schnittkantenführungselement 20a und das zweite Schnittkantenführungselement 22a sind als Führungsschienen ausgebildet. Es ist jedoch auch denkbar, dass das erste Schnittkantenführungselement 20a eine andere, einem Fachmann als sinnvoll erscheinende Ausgestaltung aufweist. Das erste Schnittkantenführungselement 20a und das zweite Schnittkantenführungselement 20a können mittels den Verbindungselementen 24a, 54a je nach Bedarf mit den Kopplungselementen 26a, 28a lösbar verbunden werden. Die Verbindungselemente 24a, 54a sind auf einer in einem mit der Schnittkantenführungskopplungseinheit 30a verbundenen Zustand an einer der tragbaren Werkzeugmaschine 10a zugewandten Seite des ersten und/oder des zweiten Schnittkantenführungselements 20a, 22a angeordnet. In einem mit der Schnittkantenführungskopplungseinheit 30a verbundenen Zustand der Schnittkantenführungselemente 20a, 22a sind der Werkzeugmaschinentrennvorrichtung 12a zugewandte Schienenkanten des ersten Schnittkantenführungselements 20a und des zweiten Schnittkantenführungselements 22a identisch mit Schnittkanten eines mittels des Schneidstrangs 14a in das Werkstück 46a einbringbaren Schnitts. Hierbei gibt ein Abstand der Schnittkanten, entlang einer senkrecht zur Schneidebene des Schneidstrangs 14a betrachtet, eine maximale Breite des mittels des Schneidstrangs 14a einbringbaren Schnitts vor.

Die Werkzeugmaschinentrennvorrichtung 12a ist in einem montierten Zustand entlang einer zumindest im Wesentlichen senkrecht zu einer Schneidebene des Schneidstrangs 14a verlaufenden Richtung zwischen den zwei Kopplungselementen 26a, 28a der Schnittkantenführungskopplungseinheit 30a angeordnet. Die Führungseinheit 16a liegt mit einem Teilbereich der Führungseinheit 16a an den zwei Kopplungselementen 26a, 28a der Schnittkantenführungskopplungseinheit 30a an. Hierbei liegt eine einem der Kopplungselemente 26a, 28a zugewandte Außenfläche 56a der Führungseinheit 16a mit einer Teilfläche der Außenfläche 56a an dem der Außenfläche 56a zugewandten Kopplungselement 26a an. Eine weitere einem der Kopplungselemente 26a, 28a zugewandte Außenfläche 58a der Führungseinheit 16a liegt mit einer Teilfläche der weiteren Außenfläche 58a an dem der weiteren Außenfläche 58a zugewandten Kopplungselement 28a an. Die Außenfläche 56a und die weitere Außenfläche 58a verlaufen zumindest im Wesentlichen parallel zueinander und zumindest im Wesentlichen parallel zur Schneidebene des Schneidstrangs 14a. Somit wird die Führungseinheit 16a mittels des Anliegens der Außenfläche 56a und der weiteren Außenfläche 58a an den Kopplungselementen 26a, 28a entlang zwei entgegengesetzt und zumindest im Wesentlichen senkrecht zur Schneidebene verlaufenden Richtungen seitlich in einem Teilbereich der Führungseinheit 16a durch die Kopplungselemente 26a, 28a gestützt. Die Schnittkantenführungskopplungseinheit 30a weist hierbei eine Längsachse 32a auf, die zumindest in einem Betriebszustand zumindest im Wesentlichen senkrecht zu einer Antriebseinheitslängsachse 34a der Antriebseinheit 36a der tragbaren Werkzeugmaschine 10a angeordnet ist. Die Antriebseinheitslängsachse 34a verläuft koaxial zu einer Rotationsachse einer als Ankerwelle ausgebildeten Antriebswelle (hier nicht näher dargestellt) der Antriebseinheit 36a. Es ist jedoch auch denkbar, dass die Längsachse 32a der Schnittkantenführungskopplungseinheit 30a eine andere, einem Fachmann als sinnvoll erscheinende Ausrichtung aufweist.

Bei einer Bearbeitung des Werkstücks 46a wird mittels eines Markierungsstifts, wie beispielsweise eines Bleistifts, eine Schnittlinie auf der Oberfläche 48a des Werkstücks 46a markiert. Die Schnittlinie dient hierbei als Orientierung für den Bediener an welcher Stelle ein Schnitt mittels des Schneidstrangs 14a in das Werkstück 46a eingebracht werden soll. Das erste Schnittkantenführungselement 20a und/oder das zweite Schnittkantenführungselement 22a werden von dem Bediener auf die Oberfläche 48a des Werkstücks aufgelegt und mit einer Schienenkante an die Schnittlinie bewegt, bis die Schienenkante und die Schnittlinie in einer Flucht sind. Die tragbare Werkzeugmaschine 10a wird in einem Betrieb zur Einbringung des Schnitts mittels des Schneidstrangs 14a an eine Außenkante des Werkstücks 46a angesetzt und entlang der Führungsfläche 50a des ersten Schnittkantenführungselements 20a und/oder entlang der Führungsfläche 52a des zweiten Schnittkantenführungselements 22a bewegt. Hierbei wird eines der Kopplungselemente 24a, 26a der Schnittkantenführungskopplungseinheit 30a formschlüssig mit einem der Verbindungselemente 24a, 54a des ersten Schnittkantenführungselements 20a und/oder des zweiten Schnittkantenführungselements 22a verbunden. Somit wird die Werkezugmaschinentrennvorrichtung 12a und/oder die tragbare Werkzeugmaschine 10a mittels des ersten Schnittkantenführungselements 20a und/oder des zweiten Schnittkantenführungselements 22a der Schnittkantenführungseinheit 20a zur Einbringung eines Schnitts mittels des Schneidstrangs 14a präzise entlang der Schnittlinie geführt.

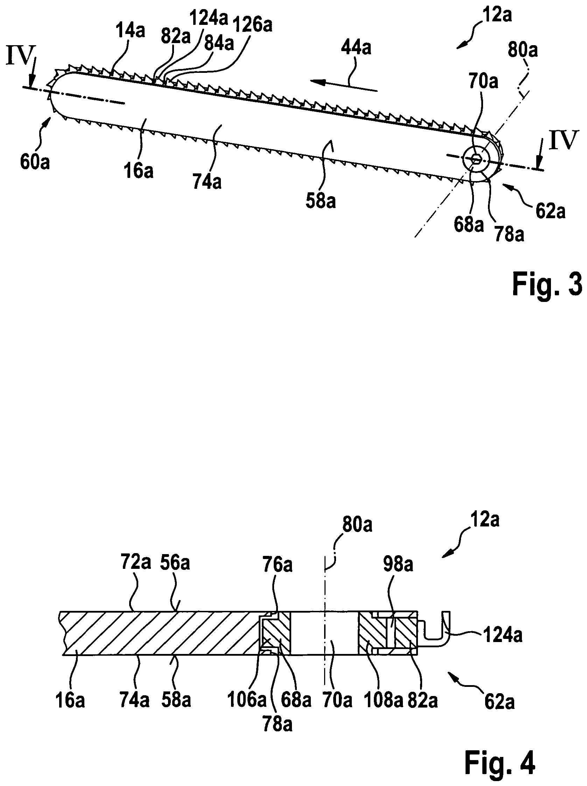

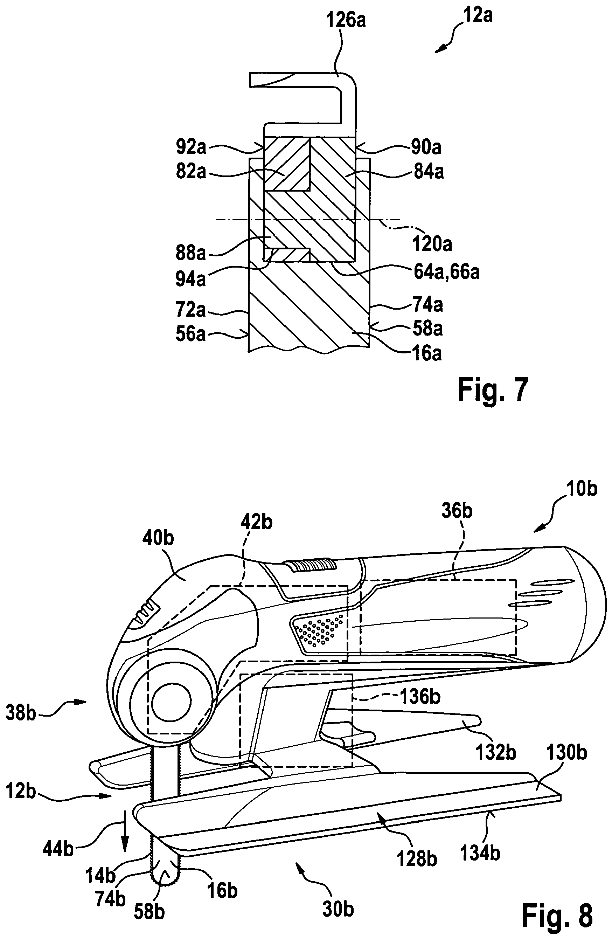

Figur 3 zeigt die Werkzeugmaschinentrennvorrichtung 12a in einem von der Kopplungsvorrichtung 38a der tragbaren Werkzeugmaschine 10a entkoppelten Zustand. Die Werkzeugmaschinentrennvorrichtung 12a weist den Schneidstrang 14a und die Führungseinheit 16a auf, die zusammen ein geschlossenes System bilden. Die Führungseinheit 16a ist als Schwert ausgebildet. Ferner weist die Führungseinheit 16a, in der Schneidebene des Schneidstrangs 14a betrachtet, zumindest zwei konvex ausgebildete Enden 60a, 62a auf. Die konvex ausgebildeten Enden 60a, 62a der Führungseinheit 16a sind an zwei sich abgewandten Seiten der Führungseinheit 16a angeordnet. Der Schneidstrang 14a wird mittels der Führungseinheit 16a geführt. Hierzu weist die Führungseinheit 16a zumindest ein Führungselement 64a (Figur 7) auf, mittels dessen der Schneidstrang 14a geführt wird. Das Führungselement 64a ist hierbei als Führungsnut 66a ausgebildet, die sich in der Schneidebene des Schneidstrangs 14a entlang eines gesamten Umfangs der Führungseinheit 16a erstreckt. Hierbei wird der Schneidstrang 14a mittels die Führungsnut 66a begrenzenden Randbereichen der Führungseinheit 16a geführt. Es ist jedoch auch denkbar, dass das Führungselement 64a in einer anderen, einem Fachmann als sinnvoll erscheinenden Art und Weise, wie beispielsweise als rippenartige Anformung an der Führungseinheit 16a, die in eine Ausnehmung an dem Schneidstrang 14a eingreift, ausgebildet ist. Der Schneidstrang 14a wird, in einer senkrecht zur Schneidebene verlaufenden Ebene betrachtet, von drei Seiten von den die Führungsnut 66a begrenzenden Randbereichen umgeben (Figur 7). Der Schneidstrang 14a wird während eines Betriebs umlaufend entlang des Umfangs in der Führungsnut 66a relativ zur Führungseinheit 16a bewegt.

Des Weiteren weist die Werkzeugmaschinentrennvorrichtung 12a ein mittels der Führungseinheit 16a zumindest teilweise gelagertes Drehmomentübertragungselement 68a zum Antrieb des Schneidstrangs 14a auf. Hierbei weist das Drehmomentübertragungselement 68a eine Kopplungsausnehmung 70a auf, die in einem montierten Zustand mit der Antriebseinheit 36a und/oder der Getriebeeinheit 42a koppelbar ist. Die Kopplungsausnehmung 70a ist konzentrisch im Drehmomentübertragungselement 68a angeordnet. Die Kopplungsausnehmung 70a ist als Innensechskant ausgebildet. Es ist jedoch auch denkbar, dass die Kopplungsausnehmung 70a eine andere, einem Fachmann als sinnvoll erscheinende Ausgestaltung aufweist. In einem ungekoppelten Zustand des Drehmomentübertragungselements 68a mit der Antriebseinheit 36a und/oder der Getriebeeinheit 42a ist das Drehmomentübertragungselement 68a quer zur Schneidrichtung 44a des Schneidstrangs 14a und/oder entlang der Schneidrichtung 44a in der Führungseinheit 16a beweglich angeordnet (Figur 4). Hierbei ist das Drehmomentübertragungselement 68a zumindest teilweise zwischen zwei Außenwänden 72a, 74a der Führungseinheit 16a angeordnet. Die Außenwände 72a, 74a verlaufen zumindest im Wesentlichen parallel zur Schneidebene des Schneidstrangs 14a. Die Führungseinheit 16a weist in den Außenflächen 56a, 58a der Außenwände 72a, 74a jeweils eine Ausnehmung 76a, 78a auf, in der das Drehmomentübertragungselement 68a zumindest teilweise angeordnet ist.

Das Drehmomentübertragungselement 68a ist mit einem Teilbereich in den Ausnehmungen 76a, 78a der Außenwände 72a, 74a angeordnet. Das Drehmomentübertragungselement 68a weist hierbei zumindest in dem in den Ausnehmungen 76a, 78a angeordneten Teilbereich eine Erstreckung entlang einer Rotationsachse 80a des Drehmomentübertragungselements 68a auf, die bündig mit einer der Außenflächen 56a, 58a der Führungseinheit 16a abschließt. Ferner weist der in den Ausnehmungen 76a, 78a der Außenflächen 56a, 58a der Führungseinheit 16a angeordnete Teilbereich des Drehmomentübertragungselements 68a eine sich zumindest im Wesentlichen senkrecht zur Rotationsachse 80a des Drehmomentübertragungselements 68a erstreckende Außenabmessung auf, die zumindest 0,1 mm kleiner ist als eine sich zumindest im Wesentlichen senkrecht zur Rotationsachse 80a des Drehmomentübertragungselements 68a erstreckende Innenabmessung der Ausnehmungen 76a, 78a. Der in den Ausnehmungen 76a, 78a angeordnete Teilbereich des Drehmomentübertragungselements 68a ist entlang einer senkrecht zur Rotationsachse 80a verlaufenden Richtung jeweils beabstandet zu einem die jeweilige Ausnehmung 76a, 78a begrenzenden Rand der Außenwände 72a, 74a angeordnet. Somit weist der in den Ausnehmungen 76a, 78a angeordnete Teilbereich des Drehmomentübertragungselements 68a ein Spiel innerhalb der Ausnehmungen 76a, 78a auf.

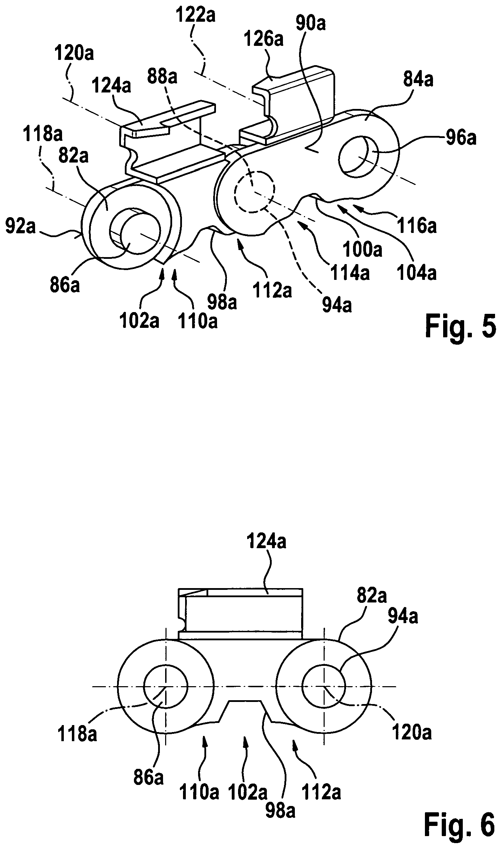

Figur 5 zeigt eine Detailansicht von Schneidenträgerelementen 82a, 84a des Schneidstrangs 14a der Werkzeugmaschinentrennvorrichtung 12a. Der Schneidstrang 14a umfasst eine Vielzahl miteinander verbundener Schneidenträgerelemente 82a, 84a, die jeweils mittels eines Verbindungselements 86a, 88a des Schneidstrangs 14a miteinander verbunden sind, das zumindest im Wesentlichen bündig mit einer von zwei Außenflächen 90a, 92a eines der miteinander verbundenen Schneidenträgerelemente 82a, 84a abschließt (vgl. auch Figur 7). Die Verbindungselemente 86a, 88a sind bolzenförmig ausgebildet. Die Außenflächen 90a, 92a verlaufen in einem in der Führungsnut 66a angeordneten Zustand des Schneidstrangs 14a zumindest im Wesentlichen parallel zur Schneidebene des Schneidstrangs 14a. Ein Fachmann wird je nach Anwendungsfall eine für den Schneidstrang 14a geeignete Anzahl an Schneidenträgerelementen 82a, 84a auswählen. Die Schneidenträgerelemente 82a, 84a sind jeweils einstückig mit einem der Verbindungselemente 86a, 88a ausgebildet. Ferner weisen die Schneidenträgerelemente 82a, 84a jeweils eine Verbindungsausnehmung 94a, 96a zur Aufnahme eines der Verbindungselemente 86a, 88a der miteinander verbundenen Schneidenträgerelemente 82a, 84a auf. Die Verbindungselemente 86a, 88a sind mittels der Führungseinheit 16a geführt (Figur 7). Hierbei sind die Verbindungselemente 86a, 88a in einem montierten Zustand des Schneidstrangs 16a in der Führungsnut 66a angeordnet. Die Verbindungselemente 86a, 88a können sich jeweils, in einer senkrecht zur Schneidebene verlaufenden Ebene betrachtet, an zwei die Führungsnut 66a begrenzenden Randbereichen abstützen.

Die Schneidenträgerelemente 82a, 84a des Schneidstrangs 14a weisen jeweils eine Antriebsausnehmung 98a, 100a auf, die jeweils in einem montierten Zustand auf einer dem Drehmomentübertragungselement 68a zugewandten Seite 102a, 104a des jeweiligen Schneidenträgerelements 82a, 84a angeordnet ist. Das Drehmomentübertragungselement 68a greift in zumindest einem Betriebszustand zum Antrieb des Schneidstrangs 14a in die Antriebsausnehmung 98a, 100a ein. Das Drehmomentübertragungselement 68a ist hierbei als Zahnrad ausgebildet. Somit umfasst das Drehmomentübertragungselement 68a Zähne 106a, 108a, die dazu vorgesehen sind, in zumindest einem Betriebszustand zum Antrieb des Schneidstrangs 14a in die Antriebsausnehmung 98a, 100a der Schneidenträgerelemente 82a, 84a einzugreifen. Ferner sind die dem Drehmomentübertragungselement 68a zugewandten Seiten 102a, 104a der Schneidenträgerelemente 82a, 84a kreisbogenförmig ausgebildet. Die dem Drehmomentübertragungselement 68a in einem montierten Zustand zugewandten Seiten 102a, 104a der Schneidenträgerelemente 82a, 84a sind jeweils in Teilbereichen 110a, 112a, 114a, 116a, zwischen einer Mittelachse 118a des jeweiligen Verbindungselements 86a, 88a und einer Mittelachse 120a, 122a der jeweiligen Verbindungsausnehmung 94a, 96a betrachtet, kreisbogenförmig ausgestaltet. Die kreisbogenförmigen Teilbereiche 110a, 112a, 114a, 116a sind jeweils angrenzend an die Antriebsausnehmungen 98a, 100a, in die das Drehmomentübertragungselement 68a eingreift, ausgebildet. Hierbei weisen die kreisbogenförmigen Teilbereiche 110a, 112a, 114a, 116a einen Radius auf, der einem Radius eines Verlaufs der Führungsnut 66a an den konvexen Enden 60a, 62a entspricht. Die Teilbereiche 110a, 112a, 114a, 116a sind konkav ausgebildet (Figuren 5 und 6).

Ferner weist der Schneidstrang 14a eine Vielzahl an Schneidelementen 124a, 126a auf. Die Schneidelemente 124a, 126a sind jeweils einstückig mit einem der Schneidenträgerelemente 82a, 84a ausgebildet. Eine Anzahl der Schneidelemente 124a, 126a ist abhängig von einer Anzahl an Schneidenträgerelementen 82a, 84a. Ein Fachmann wird je nach Anzahl an Schneidenträgerelementen 82a, 84a eine geeignete Anzahl an Schneidelementen 124a, 126a auswählen. Die Schneidelemente 124a, 126a sind dazu vorgesehen, zur Einbringung eines Schnitts mittels des Schneidstrangs 14a ein Abtrennen und/oder ein Abtragen von Werkstoffteilchen des zu bearbeitenden Werkstücks 46a zu ermöglichen. Die Schneidelemente 124a, 126a können beispielsweise als Vollmeißel, Halbmeißel oder andere, einem Fachmann als sinnvoll erscheinende Schneidenarten ausgebildet sein, die dazu vorgesehen sind, ein Abtrennen und/oder ein Abtragen von Werkstoffteilchen eines zu bearbeitenden Werkstücks zu ermöglichen. Der Schneidstrang 14a ist endlos ausgebildet. Somit ist der Schneidstrang 14a als Schneidkette ausgebildet. Die Schneidenträgerelemente 82a, 84a sind hierbei als Kettenglieder ausgebildet, die mittels der bolzenförmigen Verbindungselemente 86a, 88a miteinander verbunden sind. Es ist jedoch auch denkbar, dass der Schneidstrang 14a, die Schneidenträgerelemente 82a, 84a und/oder die Verbindungselemente 86a, 88a in einer anderen, einem Fachmann als sinnvoll erscheinenden Art und Weise ausgestaltet sind.

In Figuren 8 bis 10 sind zwei alternative Ausführungsbeispiele dargestellt. Im Wesentlichen gleichbleibende Bauteile, Merkmale und Funktionen sind grundsätzlich mit den gleichen Bezugszeichen beziffert. Zur Unterscheidung der Ausführungsbeispiele sind den Bezugszeichen der Ausführungsbeispiele die Buchstaben a bis c hinzugefügt. Die nachfolgende Beschreibung beschränkt sich im Wesentlichen auf die Unterschiede zu dem ersten Ausführungsbeispiel in den Figuren 1 bis 7, wobei bezüglich gleichbleibender Bauteile, Merkmale und Funktionen auf die Beschreibung des ersten Ausführungsbeispiels in den Figuren 1 bis 7 verwiesen werden kann.

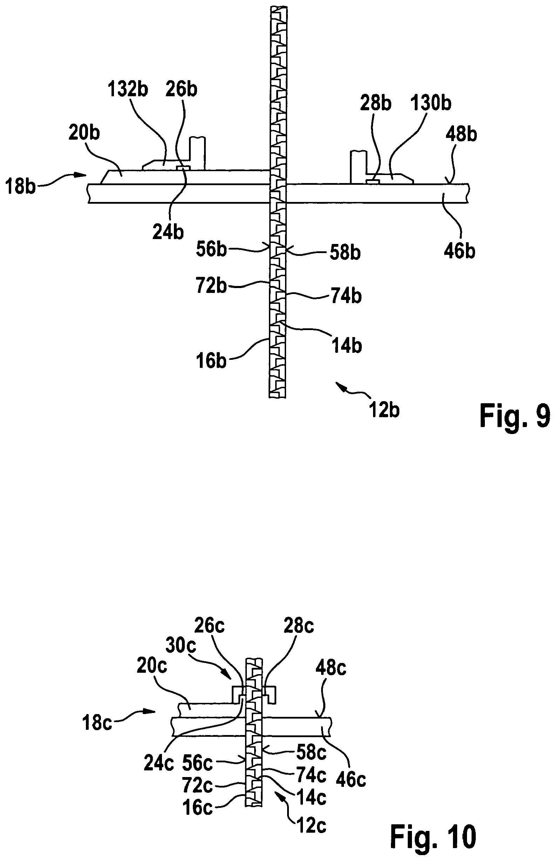

Figur 8 zeigt eine alternative tragbare Werkzeugmaschine 10b mit einer Werkzeugmaschinentrennvorrichtung 12b, die zusammen ein Werkzeugmaschinensystem bilden. Die Werkzeugmaschinentrennvorrichtung 12b weist einen zu der in der Beschreibung der Figuren 1 bis 7 beschriebenen Werkzeugmaschinentrennvorrichtung 12a analogen Aufbau auf. Die tragbare Werkzeugmaschine 10b weist eine Kopplungsvorrichtung 38b zur formschlüssigen und/oder kraftschlüssigen Kopplung mit der Werkzeugmaschinentrennvorrichtung 12b auf. Ferner weist die tragbare Werkzeugmaschine 10b ein Werkzeugmaschinengehäuse 40b auf, das eine Antriebseinheit 36b und eine Getriebeeinheit 42b der tragbaren Werkzeugmaschine 10b umschließt. Die Antriebseinheit 36b und die Getriebeeinheit 42b sind zur Erzeugung eines auf die Werkzeugmaschinentrennvorrichtung 12b übertragbaren Antriebsmoments auf eine, einem Fachmann bereits bekannte Art und Weise wirkungsmäßig miteinander verbunden. Hierbei sind die Antriebseinheit 36b und/oder die Getriebeeinheit 42b dazu vorgesehen, in einem montierten Zustand mittels der Kopplungsvorrichtung 38b mit einem Schneidstrang 14b der Werkzeugmaschinentrennvorrichtung 12b gekoppelt zu werden. Ferner umfasst die tragbare Werkzeugmaschine 10b eine Auflageeinheit 128b zur Auflage auf ein mittels der tragbaren Werkzeugmaschine 10b zu bearbeitendes Werkstück 46b (Figur 9). Die Auflageeinheit 128b ist als Gleitschuh und/oder als Grundplatte ausgebildet, mittels dem und/oder derer die tragbare Werkzeugmaschine 10b bei einer ordnungsgemäßen Handhabung während einer Bearbeitung eines Werkstücks auf dem Werkstück 46b gleitet und/oder abgestützt wird.

Des Weiteren umfasst das Werkzeugmaschinensystem eine Schnittkantenführungseinheit 18b, die dazu vorgesehen ist, die Werkzeugmaschinentrennvorrichtung 12b und/oder die tragbare Werkzeugmaschine 10b entlang einer gewollten Schnittkante zu führen. Die Schnittkantenführungseinheit 18b umfasst hierbei ein erstes Schnittkantenführungselemente 20b, das dazu vorgesehen ist, bei einer Bewegung der Werkzeugmaschinentrennvorrichtung 12b und/oder der tragbaren Werkzeugmaschine 10b relativ zum ersten Schnittkantenführungselement 20b zumindest in einem mit dem ersten Schnittkantenführungselement 20b gekoppelten Zustand der Werkzeugmaschinentrennvorrichtung 12b und/oder der tragbaren Werkzeugmaschine 10b zumindest in zwei zueinander entgegengesetzt gerichtete Richtungen wirkende Zwangskräfte auf die Werkzeugmaschinentrennvorrichtung 12b und/oder auf die tragbare Werkzeugmaschine 12b auszuüben. Hierbei umfasst die tragbare Werkzeugmaschine 10b eine Schnittkantenführungskopplungseinheit 30b zur formschlüssigen Verbindung der tragbaren Werkzeugmaschine 10b mit dem Schnittkantenführungselement 20b. Die Schnittkantenführungskopplungseinheit 30b ist hierbei einstückig mit der Auflageeinheit 128b ausgebildet. Die Auflageeinheit 128b umfasst zwei Auflageelemente 130b, 132b, die dazu vorgesehen sind, zur Führung der tragbaren Werkzeugmaschine 10b bei einer Bearbeitung des Werkstücks 46b auf eine Oberfläche 48b des Werkstücks 46b aufgelegt zu werden. Die Auflageelemente 130b, 132b sind entlang einer zumindest im Wesentlichen senkrecht zu einer Auflagefläche 134b der Auflageelemente 130b, 132b verlaufenden Richtung mittels einer Einstelleinheit 136b verstellbar (Figur 9). Somit sind die Anschlagelemente 130b, 132b an eine Höhe des Schnittkantenführungselements 20b anpassbar.

Das Schnittkantenführungselement 20b weist zu einer präzisen Führung der Werkzeugmaschinentrennvorrichtung 12b und/oder der tragbaren Werkzeugmaschine 10b ein rippenförmiges Verbindungselement 24b auf (Figur 9), das mit einem von zwei korrespondierenden Kopplungselementen 26b, 28b der Schnittkantenführungskopplungseinheit 30b formschlüssig verbindbar ist. Das Schnittkantenführungselement 20b ist mittels dem Verbindungselement 24b je nach Bedarf mit einem der Kopplungselemente 26b, 28b lösbar verbindbar. Das Verbindungselement 24b ist auf einer in einem mit der Schnittkantenführungskopplungseinheit 30b verbundenen Zustand an einer der tragbaren Werkzeugmaschine 10b zugewandten Seite des Schnittkantenführungselements 20b angeordnet. Jeweils eines der Kopplungselemente 26b, 28b ist an einem der Auflageelement 130b, 136b angeordnet. Hierbei sind die Kopplungselement 26b, 28b auf einer in einem mit dem Schnittkantenführungselement 20b verbundenen Zustand an einer dem Schnittkantenführungselement 20b zugewandten Seite der Auflageelemente 130b, 132b angeordnet. In einem mit der Schnittkantenführungskopplungseinheit 30b verbundenen Zustand des Schnittkantenführungselements 20b sind der Werkzeugmaschinentrennvorrichtung 12b zugewandte Schienenkanten des Schnittkantenführungselements 20b identisch mit Schnittkanten eines mittels des Schneidstrangs 14b in das Werkstück 46b einbringbaren Schnitts.

Figur 10 zeigt eine alternative Werkzeugmaschinentrennvorrichtung 12c mit einem Schneidstrang 14c und mit einer Führungseinheit 16c zur Führung des Schneidstrangs 14c. Die Werkzeugmaschinentrennvorrichtung 12c umfasst eine Schnittkantenführungskopplungseinheit 30c, die zu einer Erzielung von in zwei entgegengesetzt gerichtete Richtungen auf die Führungseinheit 16c wirkende Zwangskräfte formschlüssig mit zumindest einem Schnittkantenführungselement 20c einer Schnittkantenführungseinheit 18c verbindbar ist. Die Schnittkantenführungskopplungseinheit 30c ist teilweise einstückig mit der Führungseinheit 16c ausgebildet. Die Schnittkantenführungskopplungseinheit 30c weist zwei Kopplungselemente 26c, 28c auf, die dazu vorgesehen sind, ein rippenförmiges Verbindungselement 24c des Schnittkantenführungselements 20c aufzunehmen. Die Kopplungselemente 26c, 28c sind hierbei jeweils einstückig mit einer von zwei Außenwänden 72c, 74c der Führungseinheit 16c ausgebildet.

## Patentansprüche

1. Werkzeugmaschinensystem mit zumindest einer tragbaren Werkzeugmaschine, mit zumindest einer Werkzeugmaschinentrennvorrichtung, die zumindest einen Schneidstrang (14a; 14b; 14c) und zumindest eine Führungseinheit (16a; 16b; 16c) zur Führung des Schneidstrangs (14a; 14b; 14c) umfasst, die zumindest zusammen mit dem Schneidstrang (14a; 14b; 14c) ein geschlossenes System bildet, und mit zumindest einer als Linearführungseinheit ausgebildeten Schnittkantenführungseinheit (18a; 18b; 18c),
**dadurch gekennzeichnet, dass** in einem gekoppelten Zustand der Schnittkantenführungseinheit (18a; 18b; 18c) mit einer Schnittkantenführungskopplungseinheit (30a; 30b; 30c) der tragbaren Werkzeugmaschine oder der Werkzeugmaschinentrennvorrichtung eine der Werkzeugmaschinentrennvorrichtung zugewandte Kante eines Schnittkantenführungselements (20a, 22a; 20b; 20c) der Schnittkantenführungseinheit (18a; 18b; 18c) weitestgehend identisch mit Schnittkanten eines mittels des Schneidstrangs (14a, 14b, 14c) in das Werkstück (46a, 46b, 46c) einbringbaren Schnitts ist, sodass ein Abstand der Schnittkanten, entlang einer senkrecht zur Schneidebene des Schneidstrangs (14a, 14b, 14c) betrachtet, eine maximale Breite des mittels des Schneidstrangs (14a, 14b, 14c) einbringbaren Schnitts vorgibt.

2. Werkzeugmaschinensystem nach Anspruch 1,
**dadurch gekennzeichnet, dass** die Schnittkantenführungseinheit (18a; 18b; 18c) zumindest das Schnittkantenführungselement (20a, 22a; 20b; 20c) umfasst, das dazu vorgesehen ist, bei einer Bewegung der Werkzeugmaschinentrennvorrichtung und/oder bei einer Bewegung der tragbaren Werkzeugmaschine relativ zum Schnittkantenführungselement (20a, 22a; 20b; 20c) zumindest in einem mit dem Schnittkantenführungselement (20a, 22a; 20b; 20c) gekoppelten Zustand der Werkzeugmaschinentrennvorrichtung und/oder der tragbaren Werkzeugmaschine zumindest in zwei zueinander entgegengesetzt gerichtete Richtungen wirkende Zwangskräfte auf die Werkzeugmaschinentrennvorrichtung und/oder auf die tragbare Werkzeugmaschine auszuüben.

3. Werkzeugmaschinensystem nach Anspruch 2,
**dadurch gekennzeichnet, dass** das Schnittkantenführungselement (20a, 22a; 20b) zumindest ein rippenförmiges Verbindungselement (24a, 54a; 24b) aufweist, das mit zumindest einem korrespondierenden Kopplungselement (26a, 28a; 26b, 28b) der Schnittkantenführungskopplungseinheit (30a; 30b) der tragbaren Werkzeugmaschine formschlüssig verbindbar ist.

4. Werkzeugmaschinensystem nach Anspruch 3,
**dadurch gekennzeichnet, dass** die Werkzeugmaschinentrennvorrichtung in einem montierten Zustand, entlang einer zumindest im Wesentlichen senkrecht zu einer Schneidebene des Schneidstrangs (14a; 14b) verlaufenden Richtung zwischen zumindest zwei Kopplungselementen (26a, 28a; 26b, 28b) der Schnittkantenführungskopplungseinheit (30a; 30b) angeordnet ist.

5. Werkzeugmaschinensystem nach Anspruch 4,
**dadurch gekennzeichnet, dass** zumindest die Führungseinheit (16a; 16b) an den zumindest zwei Kopplungselementen (26a, 28a; 26b, 28b) anliegt.

6. Werkzeugmaschinensystem zumindest nach Anspruch 2,
**dadurch gekennzeichnet, dass** die Schnittkantenführungskopplungseinheit (30a) eine Längsachse (32a) aufweist, die zumindest in einem Betriebszustand zumindest im Wesentlichen senkrecht zu einer Antriebseinheitslängsachse (34a) einer Antriebseinheit (36a) der tragbaren Werkzeugmaschine angeordnet ist.

7. Werkzeugmaschinensystem nach einem der Ansprüche 1 bis 6, **dadurch gekennzeichnet, dass** die Schnittkantenführungskopplungseinheit (30c), zu einer Erzielung von zumindest in zwei entgegengesetzt gerichtete Richtungen auf die Führungseinheit (16c) wirkende Zwangskräfte formschlüssig mit zumindest dem Schnittkantenführungselement (20c) der Schnittkantenführungseinheit (18c) verbindbar ist.

8. Werkzeugmaschinensystem nach einem der vorhergehenden Ansprüche 1 bis 7,
**dadurch gekennzeichnet, dass** die Schnittkantenführungskopplungseinheit (30c) zumindest teilweise einstückig mit der Führungseinheit (16c) ausgebildet ist.

9. Werkzeugmaschinensystem nach einem der Ansprüche 1 bis 8, mit zumindest einer Kopplungsvorrichtung (38a; 38b), die formschlüssig und/oder kraftschlüssig mit der Werkzeugmaschinentrennvorrichtung koppelbar ist, und mit zumindest der Schnittkantenführungskopplungseinheit (30a; 30b), die zu einer Erzielung von zumindest in zwei entgegengesetzt gerichtete Richtungen auf die Schnittkantenführungskopplungseinheit (30a; 30b) wirkende Zwangskräfte formschlüssig mit zumindest dem Schnittkantenführungselement (20a, 22a; 20b) der Schnittkantenführungseinheit (18a; 18b) verbindbar ist,
**dadurch gekennzeichnet, dass** die Schnittkantenführungskopplungseinheit (30a) zumindest teilweise einstückig mit der Kopplungsvorrichtung (38a) ausgebildet ist oder die Schnittkantenführungskopplungseinheit (30b) einstückig mit einer Auflageeinheit (128b) ausgebildet ist, die zur Führung bei einer Bearbeitung eines Werkstücks (46b) zwei auf eine Oberfläche (48b) des Werkstücks (46b) auflegbare Auflageelemente (130b, 132b) umfasst, die entlang einer zumindest im Wesentlichen senkrecht zu einer Auflagefläche (134b) der Auflageelemente (130b, 132b) verlaufenden Richtung mittels einer Einstelleinheit (136b) verstellbar sind.

## Claims

1. Machine tool system having at least one portable machine tool, having at least one machine tool separating device which comprises at least one cutting strand (14a; 14b; 14c) and at least one guide unit (16a; 16b; 16c) for guiding the cutting strand (14a; 14b; 14c), which guide unit (16a; 16b; 16c) forms a closed system at least together with the cutting strand (14a; 14b; 14c), and having at least one cutting edge guide unit (18a; 18b; 18c) formed as a linear guide unit,
**characterized in that**, in a coupled state of the cutting edge guide unit (18a; 18b; 18c) to a cutting edge guide coupling unit (30a; 30b; 30c) of the portable machine tool or of the machine tool separating device, an edge, which faces the machine tool separating device, of a cutting edge guide element (20a, 22a; 20b; 20c) of the cutting edge guide unit (18a; 18b; 18c) is as far as possible identical to cutting edges of a cut that can be made in the workpiece (46a, 46b, 46c) by means of the cutting strand (14a, 14b, 14c), such that a spacing of the cutting edges, as seen along a perpendicular to the cutting plane of the cutting strand (14a, 14b, 14c), specifies a maximum width of the cut that can be made by means of the cutting strand (14a, 14b, 14c).

2. Machine tool system according to Claim 1,
**characterized in that** the cutting edge guide unit (18a; 18b; 18c) comprises at least the cutting edge guide element (20a, 22a; 20b; 20c) which is provided, in the event of a movement of the machine tool separating device and/or in the event of a movement of the portable machine tool relative to the cutting edge guide element (20a, 22a; 20b; 20c), to exert, at least in a state of the machine tool separating device and/or of the portable machine tool coupled to the cutting edge guide element (20a, 22a; 20b; 20c), constraining forces acting at least in two opposing directions on the machine tool separating device and/or on the portable machine tool.

3. Machine tool system according to Claim 2,
**characterized in that** the cutting edge guide element (20a, 22a; 20b) has at least one rib-shaped connecting element (24a, 54a; 24b) which can be connected in a positive-locking manner to at least one corresponding coupling element (26a, 28a; 26b, 28b) of a cutting edge guide coupling unit (30a; 30b) of the portable machine tool.

4. Machine tool system according to Claim 3,
**characterized in that**, in a mounted state, the machine tool separating device is arranged along a direction running at least substantially perpendicular to a cutting plane of the cutting strand (14a; 14b) between at least two coupling elements (26a, 28a; 26b, 28b) of the cutting edge guide coupling unit (30a; 30b).

5. Machine tool system according to Claim 4,
**characterized in that** at least the guide unit (16a; 16b) bears against the at least two coupling elements (26a, 28a; 26b, 28b).

6. Machine tool system at least according to Claim 2,
**characterized in that** the cutting edge guide coupling unit (30a) has a longitudinal axis (32a) which is arranged at least in one operating state at least substantially perpendicular to a drive unit longitudinal axis (34a) of a drive unit (36a) of the portable machine tool.

7. Machine tool system according to one of Claims 1 to 6, **characterized in that** the cutting edge guide coupling unit (30c) can be connected to at least the cutting edge guide element (20c) of the cutting edge guide unit (18c) in a positive-locking manner in order to achieve constraining forces acting at least in two opposing directions on the guide unit (16c).

8. Machine tool system according to one of the preceding Claims 1 to 7,
**characterized in that** the cutting edge guide coupling unit (30c) is formed at least partially in one piece with the guide unit (16c).

9. Machine tool system according to one of Claims 1 to 8, having at least one coupling device (38a; 38b) which can be coupled in a positive-locking manner and/or non-positive-locking manner to the machine tool separating device, and having at least the cutting edge guide coupling unit (30a; 30b) which can be connected to at least the cutting edge guide element (20a, 22a; 20b) of the cutting edge guide unit (18a; 18b) in a positive-locking manner in order to achieve constraining forces acting at least in two opposing directions on the cutting edge guide coupling unit (30a; 30b),
**characterized in that** the cutting edge guide coupling unit (30a) is formed at least partially in one piece with the coupling device (38a) or the cutting edge guide coupling unit (30b) is formed in one piece with a bearing unit (128b) which comprises two bearing elements (130b, 132b) which can be placed on a surface (48b) of the workpiece (46b) for guiding when machining a workpiece (46b), which bearing elements (130b, 132b) are adjustable by means of an adjusting unit (136b) along a direction running at least substantially perpendicular to a bearing surface (134b) of the bearing elements (130b, 132b).

## Revendications

1. Système de machine-outil comportant au moins une machine-outil portative, comportant au moins un dispositif de séparation de machine-outil qui comporte au moins un brin de coupe (14a ; 14b ; 14c) et au moins une unité de guidage (16a ; 16b ; 16c) pour le guidage du brin de coupe (14a ; 14b ; 14c), laquelle forme au moins conjointement avec le brin de coupe (14a ; 14b ; 14c) un système fermé, et comportant au moins une unité de guidage d'arête de coupe (18a ; 18b ; 18c) réalisée sous forme d'unité de guidage linéaire,
**caractérisé en ce que**, dans un état accouplé de l'unité de guidage d'arête de coupe (18a ; 18b ; 18c) avec une unité d'accouplement de guidage d'arête de coupe (30a ; 30b ; 30c) de la machine-outil portative ou du dispositif de séparation de machine-outil, une arête, tournée vers le dispositif de séparation de machine-outil, d'un élément de guidage d'arête de coupe (20a, 22a ; 20b ; 20c) de l'unité de guidage d'arête de coupe (18a ; 18b ; 18c) est dans une très large mesure identique à des arêtes de coupe d'une entaille pouvant être ménagée dans la pièce (46a, 46b, 46c) au moyen du brin de coupe (14a, 14b, 14c), de telle sorte qu'un écartement des arêtes de coupe, considéré le long d'une perpendiculaire au plan de coupe du brin de coupe (14a, 14b, 14c), prédéfinisse une largeur maximale de l'entaille pouvant être ménagée au moyen du brin de coupe (14a, 14b, 14c).

2. Système de machine-outil selon la revendication 1,
**caractérisé en ce que** l'unité de guidage d'arête de coupe (18a ; 18b ; 18c) comporte au moins l'élément de guidage d'arête de coupe (20a, 22a ; 20b ; 20c) qui est prévu pour, lors d'un déplacement du dispositif de séparation de machine-outil et/ou lors d'un déplacement de la machine-outil portative par rapport à l'élément de guidage d'arête de coupe (20a, 22a ; 20b ; 20c), au moins dans un état accouplé à l'élément de guidage d'arête de coupe (20a, 22a ; 20b ; 20c) du dispositif de séparation de machine-outil et/ou de la machine-outil portative, exercer des forces de contrainte agissant au moins dans deux sens opposés l'un à l'autre sur le dispositif de séparation de machine-outil et/ou sur la machine-outil portative.

3. Système de machine-outil selon la revendication 2,
**caractérisé en ce que** l'élément de guidage d'arête de coupe (20a, 22a ; 20b) comprend au moins un élément de liaison (24a, 54a ; 24b) en forme de nervure qui peut être relié par complémentarité de forme à au moins un élément d'accouplement (26a, 28a ; 26b, 28b) correspondant de l'unité d'accouplement de guidage d'arête de coupe (30a ; 30b) de la machine-outil portative.

4. Système de machine-outil selon la revendication 3,
**caractérisé en ce que** le dispositif de séparation de machine-outil est, dans un état monté, disposé entre au moins deux éléments d'accouplement (26a, 28a ; 26b, 28b) de l'unité d'accouplement de guidage d'arête de coupe (30a ; 30b) le long d'une direction s'étendant au moins sensiblement perpendiculairement à un plan de coupe du brin de coupe (14a ; 14b).

5. Système de machine-outil selon la revendication 4,
**caractérisé en ce qu'**au moins l'unité de guidage (16a ; 16b) s'appuie contre lesdits au moins deux éléments d'accouplement (26a, 28a ; 26b, 28b).

6. Système de machine-outil au moins selon la revendication 2,
**caractérisé en ce que** l'unité d'accouplement de guidage d'arête de coupe (30a) présente un axe longitudinal (32a) qui est, au moins dans un état de fonctionnement, disposé au moins sensiblement perpendiculairement à un axe longitudinal (34a) d'une unité d'entraînement (36a) de la machine-outil portative.

7. Système de machine-outil selon l'une des revendications 1 à 6, **caractérisé en ce que** l'unité d'accouplement de guidage d'arête de coupe (30c) peut être reliée par complémentarité de forme à au moins l'élément de guidage d'arête de coupe (20c) de l'unité de guidage d'arête de coupe (18c) pour produire des forces de contrainte agissant au moins dans deux sens opposés sur l'unité de guidage (16c).

8. Système de machine-outil selon l'une des revendications précédentes 1 à 7,
**caractérisé en ce que** l'unité d'accouplement de guidage d'arête de coupe (30c) est formée au moins partiellement d'un seul tenant avec l'unité de guidage (16c).

9. Système de machine-outil selon l'une des revendications 1 à 8, comprenant au moins un dispositif d'accouplement (38a ; 38b) qui peut être accouplé par complémentarité de forme et/ou par force au dispositif de séparation de machine-outil, et comportant au moins l'unité d'accouplement de guidage d'arête de coupe (30a ; 30b) qui peut être reliée par complémentarité de forme à au moins l'élément de guidage d'arête de coupe (20a, 22a ; 20b) de l'unité de guidage d'arête de coupe (18a ; 18b) pour produire des forces de contrainte agissant au moins dans deux sens opposés sur l'unité d'accouplement de guidage d'arête de coupe (30a ; 30b),
**caractérisé en ce que** l'unité d'accouplement de guidage d'arête de coupe (30a) est formée au moins partiellement d'un seul tenant avec le dispositif d'accouplement (38a) ou l'unité d'accouplement de guidage d'arête de coupe (30b) est formée d'un seul tenant avec une unité d'appui (128b) qui comporte deux éléments d'appui (130b, 132b) pouvant être appliqués sur une surface (48b) d'une pièce (46b) pour le guidage lors d'un usinage de la pièce (46b), lesquels éléments d'appui sont déplaçables au moyen d'une unité de réglage (136b) le long d'une direction s'étendant au moins sensiblement perpendiculairement à une surface d'appui (134b) des éléments d'appui (130b, 132b).
